(19) Europäisches Patentamt / European Patent Office / Office européen des brevets

(11) **EP 4 065 864 B1**

(12) **EUROPÄISCHE PATENTSCHRIFT**

(45) Veröffentlichungstag und Bekanntmachung des Hinweises auf die Patenterteilung:
**06.08.2025  Patentblatt 2025/32**

(21) Anmeldenummer: **20806959.1**

(22) Anmeldetag: **11.11.2020**

(51) Internationale Patentklassifikation (IPC):
**F16H 61/28** *(2006.01)*    **F16H 61/32** *(2006.01)*
**F16H 63/30** *(2006.01)*

(52) Gemeinsame Patentklassifikation (CPC):
**F16H 61/28; F16H 61/32; F16H 63/304;**
F16H 2061/2823

(86) Internationale Anmeldenummer:
**PCT/EP2020/081693**

(87) Internationale Veröffentlichungsnummer:
**WO 2021/104862 (03.06.2021 Gazette 2021/22)**

(54) **VERFAHREN UND VORRICHTUNG ZUR ERMITTLUNG EINER BETÄTIGUNGSKRAFT EINES STELLAKTUATORS**

METHOD AND DEVICE FOR ASCERTAINING AN ACTUATION FORCE OF AN ACTUATOR

PROCÉDÉ ET DISPOSITIF POUR DÉTERMINER UNE FORCE D'ACTIONNEMENT D'UN ACTIONNEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2019  DE 102019131945**

(43) Veröffentlichungstag der Anmeldung:
**05.10.2022  Patentblatt 2022/40**

(73) Patentinhaber: **KNORR-BREMSE Systeme für Nutzfahrzeuge GmbH**
**80809 München (DE)**

(72) Erfinder: **GEIS-ESSER, Daniel**
**81377 München (DE)**

(56) Entgegenhaltungen:
**DE-A1- 10 065 387       DE-A1- 10 136 731**
**DE-A1- 102010 018 194   DE-A1- 19 723 393**
**DE-B4- 19 758 518       DE-T2- 69 402 779**

EP 4 065 864 B1

**Beschreibung**

Die vorliegende Erfindung bezieht sich auf Möglichkeiten zur Ermittlung einer Betätigungskraft eine Stellaktuators gemäß der Gegenstände der unabhängigen Ansprüche.

Elektromechanische Stellaktuatoren werden in vielen Technikbereichen eingesetzt. Insbesondere werden Stellaktuatoren bei Fahrzeugen, wie beispielsweise Nutzfahrzeugen, eingesetzt. Solche Aktuatoren sind beispielsweise dazu ausgebildet, weitere Elemente, wie beispielsweise eine Kupplung im Fahrzeug oder ein Schaltelement eines Getriebes zum Gangwechsel zu betätigen. Dazu weisen die Stellaktuatoren ein Übertragungselement auf, durch dessen Verschiebung eine Betätigung der weiteren Elemente erfolgen kann.

Solche Stellaktuatoren sind üblicherweise wegbasiert geregelt. Eine wegbasierte Regelung ist jedoch nicht geeignet zu erkennen, ob eine Betätigungskraft, die das Übertragungselement auf das weitere Element aufbringt, einen zulässigen Maximalwert übersteigt, so dass ein Risiko besteht, dass der Stellaktuator oder das weitere Element durch die zu hohe Betätigungskraft Schaden nehmen. In einem Schaltgetriebe besteht beispielsweise das Problem, dass zu hohe Betätigungskräfte durch eine Zahn-auf-Zahn-Stellung verursacht werden können. Auch können Betriebssituationen auftreten, in denen eine zu hohe Synchro-Kraft benötigt wird.

Aus der DE 197 23 393 A1 und aus der DE 197 58 518 B4 ist eine Vorrichtung zur automatisierten Betätigung einer Übersetzungseinstellung eines Getriebes und/oder zur automatisierten Betätigung eines Drehmomentübertragungssystems mit zumindest einer Steuereinheit und zumindest einem von der Steuereinheit ansteuerbaren Aktor zur automatisierten Betätigung bekannt, wobei eine Betätigungskraft des Aktors aus dem Motorstrom des Aktors berechnet werden kann.

Aus der DE 100 65 387 A1 ist ein Verfahren bekannt, bei dem eine Gangstufe eines automatisierten Schaltgetriebes überwacht wird und wobei eine Krafterfassung durch Erfassung des Stromes des Aktuators zum Wählen der Schaftgasse und zum Schalten der Gangstufe erfolgt.

Schließlich ist aus der DE 101 36 731 A1 ein Verfahren zum Ermitteln eines Synchronpunkts in einem Getriebes bekannt, wobei das Getriebe zum Schalten der Gänge wenigstens einen Aktuator aufweist und zur Erfassung der Betätigungskraft pro Wegeinheit des Aktuators der im Aktuator fließende Strom gemessen wird.

Das Dokument DE 694 02 779 T2, auf welchem die zweiteilige Anspruchsfassung basiert, offenbart ein Verfahren zum Steuern einer auf einen Schaltmechanismus eines automatischen mechanischen Getriebes bei einem Schaltvorgang ausgeübten Kraft.

Daher ist es Aufgabe der vorliegenden Erfindung, eine Möglichkeit zu schaffen, die Betätigungskraft des Stellaktuators zuverlässig zu bestimmen.

Diese Aufgabe wird durch die Gegenstände der unabhängigen Ansprüche gelöst. Vorteilhafte Weiterbildungen sind Gegenstand der Unteransprüche.

Erfindungsgemäß ist ein Verfahren zur Bestimmung einer Betätigungskraft eines Stellaktuators vorgesehen, wobei der Stellaktuator dazu ausgebildet ist, die Betätigungskraft durch Aufnahme elektrischen Stroms, insbesondere mittels eines Elektromotors, zu erzeugen und auf zumindest ein weiteres Element zu übertragen, und wobei die Betätigungskraft durch Auswertung eines Stromstärkesignals, das die Höhe der Stromstärke des aufgenommenen elektrischen Stroms beschreibt, bestimmt wird.

Dies ist dadurch zu begründen, dass die mechanische Leistungsabgabe des Stellaktuators, und insbesondere des Elektromotors, proportional zu der elektrischen Leistungsaufnahme ist, die insbesondere durch die Basisformel

$$P \text{ (Leistung)} = U \text{ (Spannung)} * I \text{ (Strom)}$$

bestimmbar ist. Diese Basisformel kann auch in abgewandelter Form Verwendung finden. So kann beispielsweise auch ein Einfluss eines Wirkungsgrades zwischen der aufgenommenen elektrischen Leistung und der abgegebenen mechanischen Leistung berücksichtigt werden.

$$P \text{ (Leistung)} = \mu \text{ (Wirkungsgrad)} * \text{ (Spannung)} * I \text{ (Strom)}$$

Statt dem Wirkungsgrad oder auch zusätzlich dazu können weitere Rechengrößen verwendet werden, die zur Modellierung der Leistungsaufnahme bzw. Leistungsabgabe sinnvoll sind. Bei konstanter elektrischer Spannung ist die mechanische Leistungsabgabe direkt aus dem Stromstärkesignal bestimmbar. Aus der mechanischen Leistungsabgabe kann aufgrund der Kenntnis des Typs des Stellaktuators, bzw. des verbauten Elektromotors, und sonstiger konstruktiver Gegebenheiten, wie einer Übersetzung, die Betätigungskraft bestimmt werden.

Zudem weist der Stellaktuator ein Übertragungselement auf, das dazu ausgebildet ist, parallel zu einer Betätigungsrichtung verschoben zu werden, und das dazu ausgebildet ist, die Betätigungskraft auf das zumindest eine weitere Element zu übertragen. Das Übertragungselement ist vorzugsweise als Stab ausgebildet, dessen Achse vorzugsweise parallel zu der Betätigungsrichtung orientiert ist.

Außerdem wird eine Erfassung einer Position des Übertragungselementes entlang der Betätigungsrichtung durchgeführt.

Vorzugsweise wird ein Zusammenhang zwischen der Position des Übertragungselementes entlang der Betätigungsrichtung und der Betätigungskraft ermittelt. Dieser Zusammenhang kann insbesondere als Kennlinie in einem Speichermedium einer Steuervorrichtung, wie sie weiter unten beschrieben ist, gespeichert werden.

Vorzugsweise wird aus dem Zusammenhang der Position des Übertragungselementes entlang der Betätigungsrichtung und der Betätigungskraft eine Parametrierung für eine Steuer- und/oder Regelungsfunktion des Stellaktuators bestimmt. Insbesondere bei Verwendung des Stellaktuators bei einer Kupplung kann so eine vorgesteuerte Regelung zur Kupplungsbetätigung ausgebildet werden.

Vorzugsweise erfolgt die Erfassung der Position des Übertragungselementes entlang der Betätigungsrichtung direkt und/oder indirekt, insbesondere durch eine Erfassung einer Drehzahl und/oder eines Drehwinkels eines Elektromotors. Die direkte Erfassung der Position kann über Erfassungsmittel, wie Positionssensoren, erfolgen, die dazu ausgebildet sind, die Position des Übertragungselementes entlang der Betätigungsrichtung zu erfassen. Alternativ oder zusätzlich kann die Position auch indirekt erfasst werden, indem Größen erfasst werden, aus denen die Position des Übertragungselementes bestimmt werden kann. Ist beispielsweise ein rotatorisch arbeitender Elektromotor vorgesehen, aus dessen Drehbewegung eine translatorische Bewegung des Übertragungselementes resultiert, so kann aus der Erfassung der Drehzahl und/oder des Drehwinkels des Motors bei Kenntnis der zwischen Elektromotor und Übertragungselement liegenden Übersetzung auf eine Änderung der Position des Übertragungselementes geschlossen werden. Die direkte und die indirekte Erfassung der Position können auch gleichzeitig erfolgen. So kann insbesondere eine Plausibilisierung der Position, die direkt erfasst wurde, durch die indirekte Erfassung erfolgen.

Vorzugsweise wird über den Stellaktuator eine Fahrzeugkupplung betätigt, wobei die Betätigungskraft direkt oder über einer Übersetzung als Ausrückkraft in die Fahrzeugkupplung eingebracht wird.

Vorzugsweise wird über den Stellaktuator ein Fahrzeuggetriebe betätigt, wobei die Betätigungskraft direkt oder über eine Übersetzung als Stellkraft in das Fahrzeuggetriebe eingebracht wird, um darin insbesondere einen Gangwechsel durchzuführen.

Erfindungsgemäß erfolgt eine Limitierung der Betätigungskraft durch eine Limitierung des aufgenommenen elektrischen Stroms. Wird eine zu hohe Betätigungskraft ermittelt, die beispielsweise einen festgelegten Grenzwert überschreitet, so kann durch die Limitierung der Stromaufnahme erreicht werden, dass die Betätigungskraft nicht weiter zunimmt. Schäden aufgrund zu hoher Betätigungskräfte, wie eingangs erwähnt, können somit vermieden werden. Dieses Vorgehen hat beispielsweise gegenüber fluidisch betätigten Stellaktuatoren den Vorteil, dass eine Limitierung der Betätigungskraft sehr schnell erfolgen kann, so dass auch ein Überschießen der Betätigungskraft über den zulässigen Grenzwert durch entsprechende Regelung leicht vermieden werden kann. Dies liegt nicht zuletzt daran, dass der elektrische Strom im Vergleich zu Fluiden, wie Luft oder Öl, praktisch keine Trägheit aufweist.

Gemäß der vorliegenden Erfindung, erfolgt eine

Regelung des Stellaktuators auf Basis der Position des Übertragungselement bei gleichzeitiger Überwachung der Betätigungskraft wegabhängig. Erfindungsgemäß ist eine Steuervorrichtung vorgesehen, die dazu ausgebildet ist, eine Betätigungskraft eines Stellaktuators entsprechend dem oben beschriebenen Verfahren zu bestimmen, wobei der Stellaktuator dazu ausgebildet ist, die Betätigungskraft durch Aufnahme elektrischen Stroms, insbesondere mittels eines Elektromotors, zu erzeugen und auf zumindest ein weiteres Element zu übertragen, wobei die Steuervorrichtung eine Schnittstelle aufweist, die zum Empfang eines Stromstärkesignals ausgebildet ist, das die Höhe des elektrischen Stroms beschreibt. Die Steuervorrichtung weist eine Schnittstelle auf, die zum Empfang eines Positionssignals ausgebildet ist, das die Position des Übertragungselementes des Stellaktuators beschreibt. Die Schnittstelle kann dabei ein Anschluss für ein Positionssignal, oder ein anderes Signal, das geeignet ist die Position des Übertragungselementes entlang der Betätigungsrichtung zu bestimmen, wie oben beschrieben, sein. Die Schnittstelle kann alternativ oder zusätzlich auch ein Erfassungsmittel, insbesondere einen Positionssensor, aufweisen, das dazu ausgebildet ist, die Position des Übertragungselementes oder ein anderes Signal, das geeignet ist die Position des Übertragungselementes entlang der Betätigungsrichtung zu bestimmen, zu erfassen.

Zudem weist die Steuervorrichtung eine Schnittstelle auf, die zur Abgabe eines Stellaktuatorbeeinflussungssignals ausgebildet ist. Das Stellaktuatorbeeinflussungssignal ist vorzugsweise dazu ausgebildet, die Limitierung der Stromaufnahme, wie oben beschrieben, auszulösen. Das Stellaktuatorbeeinflussungssignal kann jedoch auch zur weiteren Steuerung und/oder Regelung des Stellaktuators ausgebildet sein. Verfügt die Steuervorrichtung über eine Information über die Position des Übertragungselementes, so kann die Steuervorrichtung auch ausgebildet sein, eine wegabhängige Regelung des Stellaktuators bei gleichzeitiger Überwachung der Betätigungskraft durchzuführen.

Die Steuervorrichtung weist zudem zumindest ein elektronisches Steuermittel, insbesondere einen Microcontroller, auf, das zur Durchführung des oben beschriebenen Verfahrens ausgebildet ist.

Erfindungsgemäß ist ein System vorgesehen, das eine Steuervorrichtung, wie oben beschrieben, und einen Stellaktuator aufweist, der dazu ausgebildet ist, eine Betätigungskraft durch Aufnahme elektrischen Stroms, zu erzeugen und auf zumindest ein weiteres Element zu übertragen. Der Stellaktuator ist vorzugsweise wie oben beschrieben ausgebildet. Das System ist zur Durchführung des oben beschriebenen Verfahrens ausgebildet. Als weiteres Element kann beispielsweise eine Kupplung, bzw. Fahrzeugkupplung, oder ein Schaltelement eines Getriebes, bzw. Fahrzeuggetriebes, das dazu ausgebildet ist, als Wirkung auf das Aufbringen der Betätigungskraft einen Gangwechsel in dem Getriebe durchzuführen, zum Einsatz kommen.

Der Stellaktuator weist ein Übertragungselement auf, das dazu ausgebildet ist, parallel zu einer Betätigungsrichtung verschoben zu werden, und das dazu ausgebildet ist, die Betätigungskraft auf das zumindest eine weitere Element zu übertragen.

Der Stellaktuator weist eine Konvertierungseinheit auf, die dazu ausgebildet ist, aus dem elektrischen Strom eine Betätigungskraft zu erzeugen und auf das Übertragungselement aufzuprägen. Das Übertragungselement ist bevorzugt wie oben beschrieben ausgebildet.

Vorzugsweise weist die Konvertierungseinheit zur Erzeugung der Betätigungskraft einen Elektromotor, insbesondere einen rotierenden Elektromotor oder einen Linearmotor, auf, wobei der Elektromotor direkt oder über Zwischenelemente auf das Übertragungselement wirkt. Als Zwischenelement kann eine Übersetzung vorgesehen sein, die beispielsweise eine rotatorische Bewegung des Elektromotors in eine translatorische Bewegung des Übertragungselementes umwandelt.

Vorzugsweise sind zur Erfassung der Position des Übertragungselementes entlang der Betätigungsrichtung Erfassungsmittel vorgesehen, die dazu ausgebildet sind, die Position des Übertragungselementes entlang der Betätigungsrichtung direkt durch Erfassung der Position und/oder aufgrund des Betriebszustands der Konvertierungseinheit zu erfassen und/oder zu bestimmen. Der Betriebszustand der Konvertierungseinheit kann vorzugsweise durch Betriebsparameter des Elektromotors, wie Drehzahl, Drehwinkel, Linearverschiebung und/oder Stromaufnahme, bestimmt werden. Die Erfassungsmittel weisen vorzugsweise die oben Beschriebenen Eigenschaften auf.

Vorzugsweise weist das System ein Gehäuse auf, in dem der Stellaktuator und die Steuervorrichtung vorgesehen sind. Somit kann vorteilhafterweise ein integrales Bauteil ausgebildet werden, das als solches leicht ein- bzw. ausgebaut werden kann, wodurch sich eine einfachere Montage bzw. Demontage ergibt bzw. wodurch die Wartung vereinfacht wird.

Erfindungsgemäß ist ferner ein Computerprogrammprodukt mit Codemitteln vorgesehen, die wenn sie auf einer Datenverarbeitungsvorrichtung, wie einer oben beschriebenen Steuervorrichtung, ausgeführt werden, diese dazu veranlassen, das oben beschriebene Verfahren auszuführen.

Vorzugsweise ist das System dazu ausgebildet, dass die Steuervorrichtung den Stellaktuator mittels des Stellaktuatorbeeinflussungssignals zu steuern und/oder zu regeln vermag. Alternativ oder zusätzlich ist das System dazu ausgebildet, dass die Steuervorrichtung von dem Stellaktuator ein Positionssignal empfängt, das die Position des Übertragungselementes entlang der Betätigungsrichtung repräsentiert. Erfindungsgemäß ist schließlich ein Datenträger mit einem Computerprogrammprodukt, wie oben beschrieben, vorgesehen.

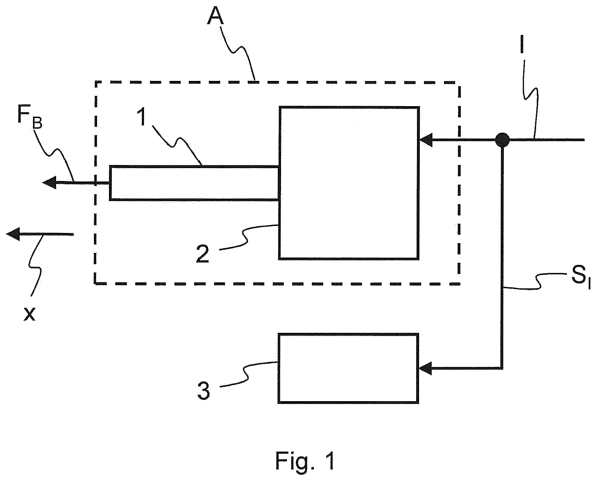

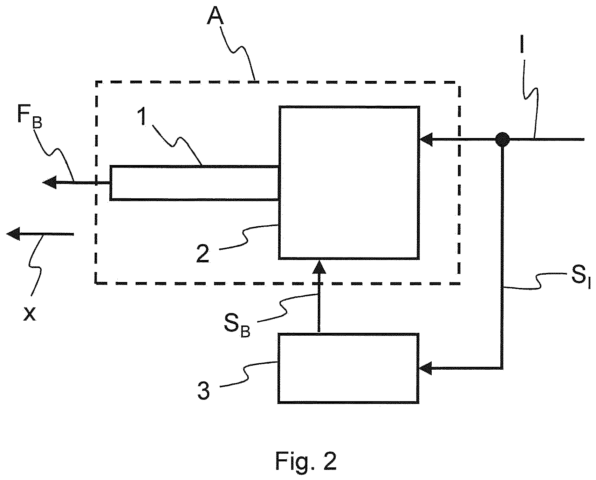

Nachfolgend wird die Erfindung anhand von Ausführungsformen und unter Zuhilfenahme der beigefügten Zeichnungen erläutert, wobei die Ausführungsformen nach Fig. 1 und 2 nicht unter den Wortlaut der Ansprüche fallen, jedoch werden sie als das Verständnis der Erfindung erleichternd angesehen.

Im Einzelnen zeigen

Fig. 1 eine nicht beanspruchte Ausführungsform,

Fig. 2 eine Weiterbildung der Ausführungsform von Fig. 1, die auch nicht unter den Wortlaut der Ansprüche fällt,

Fig. 3 eine erfindungsgemäße Weiterbildung der Ausführungsform von Fig. 2, und

Fig. 4 eine weitere Ausführungsform der Erfindung.

**Fig. 1** zeigt eine nicht beanspruchte Ausführungsform. Es ist ein Stellaktuator A (gestrichelter Kasten) gezeigt, der ein Übertragungselement 1 und eine Konvertierungseinheit 2 aufweist.

Das Übertragungselement 1 ist dazu ausgebildet, parallel zu einer Betätigungsrichtung x verschoben zu werden, um eine Betätigungskraft $F_B$, die nach links weist, auf zumindest ein weiteres Element (nicht gezeigt) zu übertragen. Die Betätigungsrichtung x erstreckt sich in Fig. 1 waagrecht nach links. Als weiteres Element kann beispielsweise eine Kupplung, bzw. Fahrzeugkupplung, oder ein Schaltelement eines Getriebes, bzw. Fahrzeuggetriebes, das dazu ausgebildet ist, als Wirkung auf das Aufbringen der Betätigungskraft $F_B$ einen Gangwechsel in dem Getriebe durchzuführen, zum Einsatz kommen. Das Übertragungselement 1 kann beispielsweise als Stab ausgebildet sein. Die Stabachse kann dabei parallel zu der Betätigungsrichtung x orientiert sein.

Die Konvertierungseinheit 2 ist dazu ausgebildet, die Betätigungskraft $F_B$ aus einem elektrischen Strom I zu erzeugen, der in die Konvertierungseinheit 2 über eine Schnittstelle des Stellaktuators A gespeist wird. Dazu weist die Konvertierungseinheit 2 beispielsweise einen Elektromotor (nicht gezeigt) auf. Dieser Elektromotor kann als rotatorisch oder translatorisch arbeitender Motor ausgebildet sein. Zur Übertragung der Bewegung des Motors, kann ferner eine Übersetzung in der Konvertierungseinheit 2 vorgesehen sein, die die Bewegung des Motors auf das Übertragungselement 1 aufprägt.

In einer speziellen Ausführungsform ist der Motor als rotatorisch arbeitender Motor ausgebildet, wobei die rotatorische Bewegung des Motors in eine translatorische Bewegung umgewandelt wird und auf das Übertragungselement 1 aufgeprägt wird. Die Umwandlung kann beispielsweise mit einer Kombination aus Ritzel und Zahnstange oder mit einem Schneckengetriebe oder einer Kugelumlaufspindel erreicht werden.

In einer speziellen Ausführungsform weisen das Übertragungselement 1 und die Konvertierungseinheit 2 jeweils eine Achse auf, wobei beide Achsen parallel zur Betätigungsrichtung x ausgerichtet sind. In einer weiteren speziellen Ausführungsform sind die Achsen von Übertragungselement 1 und Konvertierungseinheit 2 zueinander fluchtend angeordnet.

Schließlich ist eine Steuervorrichtung 3 gezeigt, die dazu ausgebildet ist, ein Stromstärkesignal $S_I$ zu empfangen, das die Stromstärke des elektrischen Stroms I repräsentiert.

In einer speziellen Ausführungsform (nicht gezeigt) kann die Steuervorrichtung 3 selbst, alternativ oder zusätzlich zu der Schnittstelle zum Empfang des Stromstärkesignals $S_I$, zur Messung der Stromstärke des elektrischen Stroms I ausgebildet sein. In diesem Fall ist die Steuervorrichtung 3 dazu ausgebildet, das Stromstärkesignal $S_I$ selbst aus der Messung des elektrischen Stroms I zu bestimmen

Die Steuervorrichtung 3 ist dazu ausgebildet, aus dem Stromstärkesignal $S_I$ eine Betätigungskraft $F_B$ zu bestimmen. Dies ist dadurch zu begründen, dass die mechanische Leistungsabgabe des Elektromotors proportional zu der elektrischen Leistungsaufnahme ist. Bei konstanter elektrischer Spannung ist die mechanische Leistungsabgabe des Elektromotors direkt aus dem Stromstärkesignal $S_I$ bestimmbar. Aus der mechanischen Leistungsabgabe kann aufgrund der Kenntnis des Typs der Konvertierungsvorrichtung 2, bzw. des verbauten Elektromotors, und sonstiger konstruktiver Gegebenheiten, wie einer Übersetzung zwischen Konvertierungseinheit 2 und Übertragungselement 1, die Betätigungskraft $F_B$ bestimmt werden.

Die Steuervorrichtung 3 weist zumindest ein Steuermittel, beispielsweise einen Microcontroller, auf, das zur Ausführung des Verfahrens, wie zu Fig. 1 beschrieben, ausgebildet ist.

Die Steuervorrichtung 3 ist somit dazu ausgebildet, aus dem Stromstärkesignal $S_I$ die Betätigungskraft $F_B$ zu bestimmen.

In **Fig. 2** ist eine Weiterbildung der Ausführungsform von Fig. 1 gezeigt. Der Aufbau entspricht im Wesentlichen dem der Ausführungsform von Fig. 1, daher wird auf die obigen Ausführungen verwiesen. Zusätzlich ist zwischen der Steuervorrichtung 3 und dem Stellaktuator A eine Verbindung vorgesehen, worüber die Steuervorrichtung 3 ein Stellaktuatorbeeinflussungssignal $S_B$ an den Stellaktuator A schicken kann.

Das Stellaktuatorbeeinflussungssignal $S_B$ ist dazu ausgebildet, eine Limitierung der Aufnahme des elektrischen Stroms I durch den Stellaktuator A, insbesondere durch die Konvertierungseinheit 2, zu verursachen. Empfängt die Steuervorrichtung 3 ein Stromstärkesignal $S_I$, das einer Betätigungskraft $F_B$ entspricht, die eine maximal zulässige Betätigungskraft übersteigt, so kann eine Begrenzung der Betätigunskraft $F_B$ auf einen zulässigen Wert durch das Stellaktuatorbeeinflussungssignal $S_B$ erreicht werden, das durch die Steuervorrichtung 3 an den Stellaktuator A, insbesondere an die Konvertierungseinheit 2, geschickt wird.

Zusätzlich kann das Stellaktuatorbeeinflussungssignal $S_B$ dazu ausgebildet sein, den Stellaktuator A auch darüber hinaus, zu beeinflussen. So kann beispielsweise die Stromaufnahme nicht nur limitiert werden, sondern auch gesteuert.

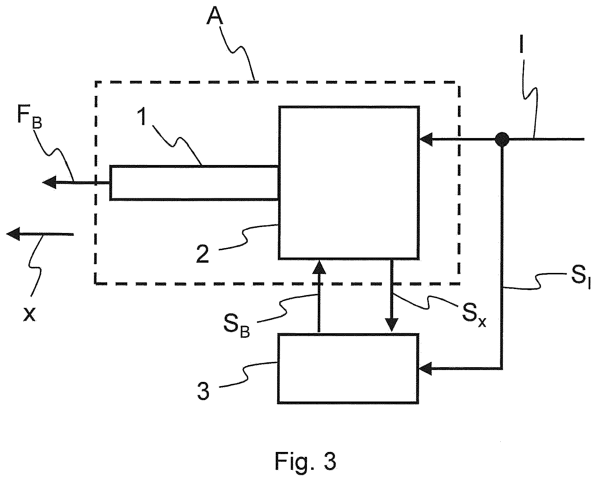

In **Fig. 3** ist eine erfindungsgemäße Weiterentwicklung der Ausführungsform von Fig. 2 gezeigt. Der Aufbau entspricht im Wesentlichen dem der Ausführungsform von Fig. 2, daher wird auf die obigen Ausführungen verwiesen. Zusätzlich ist zwischen der Steuervorrichtung 3 und dem Stellaktuator A eine Verbindung vorgesehen, worüber die Steuervorrichtung 3 ein Positionssignal $S_x$ von dem Stellaktuator A empfangen kann.

Das Positionssignal $S_x$ ist dazu ausgebildet, eine Position des Übertragungselementes 1 entlang der Betätigungsrichtung x zu repräsentieren. Auf diese Weise kann die Steuervorrichtung 3 die Position des Übertragungselementes 1 entlang der Betätigungsrichtung x verarbeiten und/oder bei der Generierung des Stellaktuatorbeeinflussungssignals $S_B$ zu berücksichtigen. Somit ist auch eine Regelung des Stellaktuators A durch das Stellaktuatorbeeinflussungssignal $S_B$ möglich.

Das Positionssignal $S_x$ kann beispielsweise eine direkte Angabe der Position des Übertragungselementes 1 enthalten und/oder Größen enthalten, die geeignet sind, die Position des Übertragungselementes 1 zu bestimmen. Dies kann beispielsweise eine Drehzahl und/oder ein Drehwinkel des Elektromotors der Konvertierungseinheit 2 sein, aus der mittels Integration eine Änderung der Position des Übertragungselementes 1 bestimmt werden kann. Eine direkte Positionsangabe kann beispielsweise durch ein Erfassungsmittel, insbesondere durch einen Positionssensor, erfasst werden.

Die Steuervorrichtung 3 ist dazu ausgebildet, einen Zusammenhang der Position des Übertragungselementes 1

entlang der Betätigungsrichtung x und der Betätigungskraft $F_B$ zu ermitteln. Auf diese Weise kann aus dem Zusammenhang der Position des Übertragungselementes 1 entlang der Betätigungsrichtung x und der Betätigungskraft $F_B$ eine Parametrierung für eine Steuer- und/oder Regelungsfunktion des Stellaktuators A bestimmt werden. So kann eine Funktion, die zur Generierung des Stellaktuatorbeeinflussungssignals $S_B$ ausgebildet ist, geeignet parametriert werden.

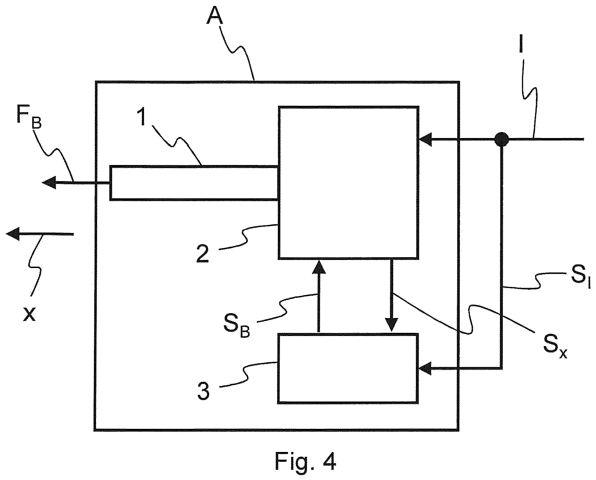

**Fig. 4** zeigt eine weitere Ausführungsform der Erfindung. Der Aufbau entspricht im Wesentlichen dem Aufbau der Ausführungsform aus Fig. 3, daher wird auf die obigen Ausführungen verwiesen. Im Unterschied zu der Ausführungsform aus Fig. 3 ist hier die Steuervorrichtung 3 in den Stellaktuator A, bzw. in dessen Gehäuse, das durch den durchgezogenen Rahmen dargestellt ist, integriert. Auf diese Weise sind der Stellaktuator A und die Steuervorrichtung 3 als integrales Bauteil, insbesondere als System ausgebildet.

Dem Fachmann ist bei der Betrachtung der Ausführungsform aus Fig. 4 klar, dass er ebenfalls integrale Bauteile aus den Ausführungsformen der Figuren 1 und 2 ausbilden kann, indem er die dort gezeigten Steuervorrichtungen 3 in das Gehäuse des entsprechenden Stellaktuators A integriert.

In einer weiteren nicht gezeigten Ausführungsform der Erfindung kann, ausgehend von der Ausführungsform aus Fig. 3, auch keine Verbindung vorgesehen sein, über die ein Stellaktuatorbeeinflussungssignal $S_B$ an den Stellaktuator geschickt werden kann. In diesem Fall ist die Steuervorrichtung 3 lediglich dazu ausgebildet das Stellaktuatorbeeinflussungssignal $S_B$ und das Positionssignal $S_x$ zu empfangen. Die Steuervorrichtung 3 ist dann ebenfalls dazu ausgebildet, die Betätigungskraft $F_B$ zu bestimmen und optional auch einen Zusammenhang zwischen der Betätigungskraft $F_B$ und der Position des Übertragungselementes 1 herzustellen. Allerdings kann keine Steuerung und/oder Regelung durch ein Stellaktuatorbeeinflussungssignal $S_B$ erfolgen. Jedoch kann die Steuervorrichtung 3 eine Schnittstelle aufweisen, um die bestimmte Betätigungskraft $F_B$ zu versenden, so dass beispielsweise über einen Fahrzeug-BUS eine andere Steuervorrichtung auf Basis dieser Information ein entsprechendes Stellaktuatorbeeinflussungssignal erzeugen kann. Auch ist es denkbar, dass die Steuervorrichtung 3 zwar ein Stellaktuatorbeeinflussungssignal $S_B$ erzeugt, dieses jedoch eben nicht direkt an den Stellaktuator A versendet, sondern zunächst beispielsweise über einen Fahrzeugbus einer anderen Steuervorrichtung zu Steuerung und/oder Regelung des Stellaktuators A zur Verfügung stellt. Für die Ausführungsform, die in Fig. 1 gezeigt ist, gilt entsprechendes, wobei hier die Verbindung zwischen dem Stellaktuator A und der Steuervorrichtung 3 fehlt, über die das Positionssignal $S_x$ empfangen werden kann.

In Fig. 3 wurde ein Stellaktuator A und eine erfindungsgemäße Steuervorrichtung 3 gezeigt. Diese bilden ein System, wodurch ebenfalls erfindungsgemäße Gegenstände in Form eines Systems gebildet werden.

BEZUGSZEICHENLISTE

1    Übertragungselement

2    Konvertierungseinheit

3    Steuervorrichtung

A    Stellaktuator

$F_B$    Betätigungskraft

I    elektrischer Strom

$S_B$    Stellaktuatorbeeinflussungssignal

$S_I$    Stromstärkesignal

$S_x$    Positionssignal

x    Betätigungsrichtung

**Patentansprüche**

1.   Verfahren zur Bestimmung einer Betätigungskraft ($F_B$) eines Stellaktuators (A), wobei der Stellaktuator (A) dazu ausgebildet ist, die Betätigungskraft (Fs) durch Aufnahme elektrischen Stroms (I), insbesondere mittels eines Elektromotors, zu erzeugen und auf zumindest ein weiteres Element zu übertragen, und wobei

die Betätigungskraft ($F_B$) durch Auswertung eines Stromstärkesignals ($S_I$), das die Höhe der Stromstärke des aufgenommenen elektrischen Stroms (I) beschreibt, bestimmt wird, wobei
der Stellaktuator (A) ein Übertragungselement (1) aufweist, das dazu ausgebildet ist, parallel zu einer Betätigungsrichtung (x) verschoben zu werden, und das dazu ausgebildet ist, die Betätigungskraft ($F_B$) auf das zumindest eine weitere Element zu übertragen, wobei
eine Erfassung einer Position des Übertragungselementes (1) entlang der Betätigungsrichtung (x) erfolgt, und wobei
eine Limitierung der Betätigungskraft ($F_B$) durch eine Limitierung des aufgenommenen elektrischen Stroms (I) erfolgt, **dadurch gekennzeichnet, dass**
eine Regelung des Stellaktuators (A) auf Basis der Position des Übertragungselementes (1) bei gleichzeitiger Überwachung der Betätigungskraft ($F_B$) wegabhängig erfolgt.

2. Verfahren nach Anspruch 1, wobei
ein Zusammenhang der Position des Übertragungselementes (1) entlang der Betätigungsrichtung (x) und der Betätigungskraft (Fs) ermittelt wird.

3. Verfahren nach Anspruch 2, wobei
aus dem Zusammenhang der Position des Übertragungselementes (1) entlang der Betätigungsrichtung (x) und der Betätigungskraft ($F_B$) eine Parametrierung für eine Steuer- und/oder Regelungsfunktion des Stellaktuators (A) bestimmt wird.

4. Verfahren nach einem der Ansprüche 1 bis 3, wobei
die Erfassung der Position des Übertragungselementes (1) entlang der Betätigungsrichtung (x) direkt und/oder indirekt, insbesondere durch eine Erfassung einer Drehzahl und/oder eines Drehwinkels eines Elektromotors, erfolgt.

5. Verfahren nach einem der vorangegangenen Ansprüche, wobei

über den Stellaktuator (A) eine Fahrzeugkupplung betätigt wird, und die Betätigungskraft ($F_B$) direkt oder über einer Übersetzung als Ausrückkraft in die Fahrzeugkupplung eingebracht wird, oder wobei
über den Stellaktuator (A) ein Fahrzeuggetriebe betätigt wird, und die Betätigungskraft ($F_B$) direkt oder über eine Übersetzung als Stellkraft in das Fahrzeuggetriebe eingebracht wird, um darin insbesondere einen Gangwechsel durchzuführen.

6. Steuervorrichtung (3), die dazu ausgebildet ist, eine Betätigungskraft ($F_B$) eines Stellaktuators (A) zu bestimmen, wobei

der Stellaktuator (A) dazu ausgebildet ist, die Betätigungskraft ($F_B$) durch Aufnahme elektrischen Stroms (I), insbesondere mittels eines Elektromotors, zu erzeugen und auf zumindest ein weiteres Element zu übertragen, wobei
der Stellaktuator (A) ein Übertragungselement (1) aufweist, das dazu ausgebildet ist, parallel zu einer Betätigungsrichtung (x) verschoben zu werden, und das dazu ausgebildet ist, die Betätigungskraft ($F_B$) auf das zumindest eine weitere Element zu übertragen, wobei
die Steuervorrichtung (3) eine Schnittstelle aufweist, die zum Empfang eines Stromstärkesignals ($S_I$) ausgebildet ist, das die Höhe des elektrischen Stroms (I) beschreibt, wobei
die Steuervorrichtung (3) eine Schnittstelle aufweist, die zum Empfang eines Positionssignals ($S_x$) ausgebildet ist, das die Position des Übertragungselementes (1) des Stellaktuators (A) beschreibt, und wobei
die Steuervorrichtung (3) eine Schnittstelle aufweist, die zur Abgabe eines Stellaktuatorbeeinflussungssignals ($S_B$) ausgebildet ist, wobei
die Steuervorrichtung (3) zumindest ein elektronisches Steuermittel aufweist, das zur Durchführung des Verfahrens nach einem der Ansprüche 1 bis 5 ausgebildet ist.

7. System aufweisend:

- eine Steuervorrichtung (3) nach Anspruch 6 und
- einen Stellaktuator (A), der dazu ausgebildet ist, eine Betätigungskraft ($F_B$) durch Aufnahme elektrischen Stroms (I), zu erzeugen und auf zumindest ein weiteres Element zu übertragen, aufweisend:
- ein Übertragungselement (1), das dazu ausgebildet ist, parallel zu einer Betätigungsrichtung (x) verschoben zu werden, und das dazu ausgebildet ist, die Betätigungskraft ($F_B$) auf das zumindest eine weitere Element zu

**EP 4 065 864 B1**

übertragen,
- eine Konvertierungseinheit (2), die dazu ausgebildet ist, aus dem elektrischen Strom (I) eine Betätigungskraft ($F_B$) zu erzeugen und auf das Übertragungselement (1) aufzuprägen.

8. System nach Anspruch 7, wobei

die Konvertierungseinheit (2) zur Erzeugung der Betätigungskraft ($F_B$) einen Elektromotor, insbesondere einen rotierenden Elektromotor oder einen Linearmotor, aufweist, wobei
der Elektromotor direkt oder über Zwischenelemente auf das Übertragungselement (1) wirkt.

9. System nach einem der Ansprüche 7 oder 8, wobei
zur Erfassung der Position des Übertragungselementes (1) entlang der Betätigungsrichtung (x) ein Erfassungsmittel vorgesehen ist, das dazu ausgebildet ist, die Position des Übertragungselementes (1) entlang der Betätigungsrichtung (x) direkt durch Erfassung der Position und/oder aufgrund des Betriebszustands der Konvertierungseinheit (2) zu erfassen und/oder zu bestimmen.

10. System nach einem der Ansprüche 7 bis 9, aufweisend
ein Gehäuse, in dem der Stellaktuator (A) und die Steuervorrichtung (3) vorgesehen sind.

11. Computerprogrammprodukt mit Codemitteln, die wenn sie auf einer Datenverarbeitungsvorrichtung, wie einer Steuervorrichtung (3) nach Anspruch 6, ausgeführt werden, diese dazu veranlassen, das Verfahren nach einem der Ansprüche 1 bis 5 auszuführen.

12. Datenträger mit einem Computerprogrammprodukt nach Anspruch 11.


**Claims**

1. Method for determining an actuating force ($F_B$) of an actuator (A), wherein the actuator (A) is configured to generate the actuating force ($F_B$) by taking in electric current (I), in particular by means of an electric motor, and to transmit it to at least one further element, and wherein

the actuating force ($F_B$) is determined by evaluating a current intensity signal ($S_I$) which describes the magnitude of the current intensity of the electrical current (I) taken in, wherein
the actuator (A) has a transmission element (1) which is configured to be displaced parallel to an actuating direction (x) and which is configured to transmit the actuating force ($F_B$) to the at least one further element, wherein
a position of the transmission element (1) is detected along the actuating direction (x), and wherein
the actuating force ($F_B$) is limited by limiting the electrical current (I) taken in, **characterized in that**
the actuator (A) is controlled on the basis of the position of the transmission element (1) while simultaneously monitoring the actuating force ($F_B$) as a function of the displacement.

2. Method according to claim 1, wherein
a relationship between the position of the transmission element (1) along the actuating direction (x) and the actuating force ($F_B$) is determined.

3. Method according to claim 2, wherein
a parameterization for a control and/or regulating function of the actuator (A) is determined from the relationship between the position of the transmission element (1) along the actuating direction (x) and the actuating force ($F_B$).

4. Method according to any one of claims 1 to 3, wherein
the position of the transmission element (1) along the actuation direction (x) is detected directly and/or indirectly, in particular by detecting a rotational speed and/or a rotational angle of an electric motor.

5. Method according to any one of the preceding claims, wherein

a vehicle clutch is actuated by the actuator (A), and the actuating force ($F_B$) is introduced into the vehicle clutch directly or via a transmission as a disengagement force, or wherein
a vehicle transmission is actuated by the actuator (A), and the actuating force ($F_B$) is applied directly or via a transmission as an actuating force to the vehicle transmission, in particular to carry out a gear change therein.

6. Control device (3) which is configured to determine an actuating force ($F_B$) of an actuator (A), wherein

the actuator (A) is configured to generate the actuating force ($F_B$) by taking in electric current (I), in particular by means of an electric motor, and to transmit it to at least one further element, wherein

the actuator (A) has a transmission element (1) which is configured to be displaced parallel to an actuating direction (x) and which is configured to transmit the actuating force ($F_B$) to the at least one further element, wherein

the control device (3) has an interface which is configured to receive a current intensity signal ($S_I$) which describes the magnitude of the electric current (I), wherein

the control device (3) has an interface which is configured to receive a position signal ($S_x$) which describes the position of the transmission element (1) of the actuator (A), and wherein

the control device (3) has an interface which is configured to deliver an actuator influencing signal ($S_B$), wherein the control device (3) has at least one electronic control means which is configured to perform the method according to any one of claims 1 to 5.

7. System having:

- a control device (3) according to claim 6 and
- an actuator (A) which is configured to generate an actuating force ($F_B$) by taking in electric current (I) and to transmit it to at least one further element, having:
- a transmission element (1) configured to be displaced parallel to an actuating direction (x) and configured to transmit the actuating force ($F_B$) to the at least one further element,
- a conversion unit (2) which is configured to generate an actuating force ($F_B$) from the electric current (I) and to apply it to the transmission element (1).

8. System according to claim 7, wherein

the conversion unit (2) for generating the actuating force ($F_B$) comprises an electric motor, in particular a rotary electric motor or a linear motor, wherein

the electric motor acts directly or via intermediate elements on the transmission element (1).

9. System according to any one of claims 7 or 8, wherein
a detection means is provided for detecting the position of the transmission element (1) along the actuation direction (x), which detection means is configured to detect and/or determine the position of the transmission element (1) along the actuation direction (x) directly by detecting the position and/or on the basis of the operating state of the conversion unit (2).

10. System according to any one of claims 7 to 9, having
a housing in which the actuator (A) and the control device (3) are provided.

11. Computer program product with code means, which when executed on a data processing device, such as a control device (3) according to claim 6, cause it to carry out the method according to any one of claims 1 to 5.

12. Data carrier with a computer program product according to claim 11.


**Revendications**

1. Procédé de détermination d'une force d'actionnement ($F_B$) d'un actionneur (A), dans lequel l'actionneur (A) est configuré afin de générer la force d'actionnement ($F_B$) en recevant un courant électrique (I), en particulier au moyen d'un moteur électrique et de la transmettre à au moins un autre élément, et dans lequel

la force d'actionnement ($F_B$) est déterminée en évaluant un signal d'intensité de courant ($S_I$) qui décrit l'ampleur l'intensité de courant du courant (I) électrique reçu, dans lequel

l'actionneur (A) présente un élément de transmission (1) qui est configuré afin d'être déplacé parallèlement à une direction d'actionnement (x) et qui est configuré afin de transmettre la force d'actionnement ($F_B$) à l'au moins un autre élément, dans lequel

une détection d'une position de l'élément de transmission (1) est effectuée le long de la direction d'actionnement (x), et dans lequel

une limitation de la force d'actionnement ($F_B$) est effectuée en limitant le courant (I) électrique reçu, **caractérisé en ce que**

une régulation de l'actionneur (A) est effectuée sur la base de la position de l'élément de transmission (1) lors de la surveillance simultanée de la force d'actionnement ($F_B$) en fonction de la course.

2. Procédé selon la revendication 1, dans lequel
une relation entre la position de l'élément de transmission (1) le long de la direction d'actionnement (x) et la force d'actionnement ($F_B$) est déterminée.

3. Procédé selon la revendication 2, dans lequel
un paramétrage pour une fonction de commande et/ou de régulation de l'actionneur (A) est déterminé à partir de la relation entre la position de l'élément de transmission (1) le long de la direction d'actionnement (x) et la force d'actionnement ($F_B$).

4. Procédé selon l'une quelconque des revendications 1 à 3, dans lequel
la détection de la position de l'élément de transmission (1) est effectuée le long de la direction d'actionnement (x) directement et/ou indirectement, en particulier par une détection d'une vitesse de rotation et/ou d'un angle de rotation d'un moteur électrique.

5. Procédé selon l'une quelconque des revendications précédentes, dans lequel

un embrayage de véhicule est actionné par le biais de l'actionneur (A), et la force d'actionnement ($F_B$) est introduite directement ou par le biais d'un engrenage comme force de débrayage dans l'embrayage de véhicule, ou dans lequel

une transmission de véhicule est actionnée par le biais de l'actionneur (A), et la force d'actionnement ($F_B$) est introduite directement ou par le biais d'un engrenage comme force de commande dans la transmission de véhicule afin d'y exécuter en particulier un changement de vitesse.

6. Dispositif de commande (3) qui est configuré afin de déterminer une force d'actionnement ($F_B$) d'un actionneur (A), dans lequel

l'actionneur (A) est formé afin de générer la force d'actionnement ($F_B$) en recevant un courant électrique (1), en particulier au moyen d'un moteur électrique et de la transmettre à au moins un autre élément, dans lequel
l'actionneur (A) présente un élément de transmission (1) qui est configuré afin d'être déplacé parallèlement à une direction d'actionnement (x) et qui est configuré afin de transmettre la force d'actionnement ($F_B$) à l'au moins un autre élément, dans lequel
le dispositif de commande (3) présente une interface qui est configurée pour recevoir un signal d'intensité de courant ($S_I$) qui décrit l'ampleur du courant électrique (I), dans lequel
le dispositif de commande (3) présente une interface qui est configurée pour recevoir un signal de position ($S_x$) qui décrit la position de l'élément de transmission (1) de l'actionneur (A), et dans lequel
le dispositif de commande (3) présente une interface qui est configurée pour émettre un signal d'influence d'actionneur ($S_B$), dans lequel
le dispositif de commande (3) présente au moins un moyen de commande électronique qui est configuré pour exécuter le procédé selon l'une quelconque des revendications 1 à 5.

7. Système présentant :

- un dispositif de commande (3) selon la revendication 6 et
- un actionneur (A) qui est configuré afin de générer une force d'actionnement ($F_B$) en recevant un courant électrique (I) et de la transmettre à au moins un autre élément, présentant :

un élément de transmission (1) qui est configuré afin d'être déplacé parallèlement à une direction d'actionnement (x) et qui est configuré afin de transmettre la force d'actionnement ($F_B$) à l'au moins un autre élément,

- une unité de conversion (2) qui est configuré afin de générer, à partir du courant (I) électrique, une force d'actionnement ($F_B$) et de la transmettre à l'élément de transmission (1).

**8.** Système selon la revendication 7, dans lequel

l'unité de conversion (2) présente pour la génération de la force d'actionnement ($F_B$) un moteur électrique, en particulier un moteur électrique rotatif ou un moteur linéaire, dans lequel
le moteur électrique agit sur l'élément de transmission (1) directement ou par le biais d'éléments intermédiaires.

**9.** Système selon l'une quelconque des revendications 7 ou 8, dans lequel
un moyen de détection est prévu pour détecter la position de l'élément de transmission (1) le long de la direction d'actionnement (x), moyen qui est configuré afin de détecter et/ou de déterminer la position de l'élément de transmission (1) le long de la direction d'actionnement (x) directement en détectant la position et/ou sur la base de l'état de fonctionnement de l'unité de conversion (2).

**10.** Système selon l'une quelconque des revendications 7 à 9, présentant
un boîtier, dans lequel l'actionneur (A) et le dispositif de commande (3) sont prévus.

**11.** Produit de programme informatique avec des moyens de code qui, lorsqu'ils sont exécutés sur un dispositif de traitement de données, comme un dispositif de commande (3) selon la revendication 6, amène celui-ci à exécuter le procédé selon l'une quelconque des revendications 1 à 5.

**12.** Support de données avec un produit de programme informatique selon la revendication 11.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19723393 A1
- DE 19758518 B4
- DE 10065387 A1
- DE 10136731 A1
- DE 69402779 T2